# EUROPEAN PATENT SPECIFICATION

(11) **EP 2 487 993 B1**
(45) Date of publication and mention of the grant of the patent: **06.05.2015**
(21) Application number: 12154750.9
(22) Date of filing: 09.02.2012
(51) Int. Cl.: H05B 33/08

(54) **LED device with shared voltage-limiting unit and individual voltage-equalizing resistance**
LED-Vorrichtung mit gemeinsamer Spannungsbegrenzungseinheit und individuellem Spannungsausgleichswiderstand
Dispositif à DEL avec unité de limitation de tension partagée et résistance d'égalisation de tension individuelle

(30) Priority: 11.02.2011 US 201113025284; 11.02.2011 US 201113025320
(43) Date of publication of application: 15.08.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 2 099 259
- DE-A1- 4 434 274
- FR-A1- 2 891 106
- FR-A1- 2 897 574
- US-A- 5 575 459
- US-B2- 7 262 752

## Description

### BACKGROUND OF THE INVENTION

### (a) Field of the Invention

According to the present invention, hereinafter the term "LED" is the abbreviation of the light-emitting diode;

The present invention relates to a LED device with shared voltage-limiting unit and individual voltage-equalizing resistance, wherein two ends of a LED set constituted by a plurality of same-polarity series LEDs are in parallel connected with a shared voltage-limiting unit, and two ends of individual LED are respectively in parallel connected with an voltage-equalizing resistance for providing an overvoltage protection to the LEDs, so when surge voltage from a power source is generated, the surge voltage can be absorbed by the shared voltage-limiting unit, so that individual LED is protected from being damaged due to instant overvoltage or overcurrent.

### (b) Description of the Prior Art

Conventional LEDs usually parallel connect with the voltage-limiting units at two ends of each LED, such as the zener diode, to constitute the light-emitting unit, thereby when the end voltage of LED is abnormally increased, the abnormal voltage is absorbed by the zener diode; however, when the light-emitting units being parallel connected by the above mentioned LED and the zener diode are series connected (including series-parallel connected) in plural sets to constitute the light-emitting unit, the voltage is not able to be evenly distributed due to the different properties of the LED and the zener diode, so that when subj ect to abnormal high voltage, the LED loaded with higher end voltage is passed by the higher current therefore the LED is often damaged.

### SUMMARY OF THE INVENTION

The present invention provides a LED device with shared voltage-limiting unit and individual voltage-equalizing resistance, wherein two ends of a LED set constituted by a plurality of normal-polarity series LEDs are in parallel connected with a shared voltage-limiting unit, and two ends of individual LED are respectively in parallel connected with an voltage-equalizing resistance for providing an overvoltage protection to the LEDs.

According to one aspect of the invention, a light emitting unit comprises:
two or more LEDs (101) connected in series;
a voltage limiting unit (105) connected in parallel with the series connected LEDs and with the resistors (107), the voltage limiting unit (105) having a resistance which rapidly reduces when subject to overload.

### BRIEF DESCRIPTION OF THE DRAWINGS

FIG 1 is a circuit schematic diagram showing that a conventional light-emitting unit is constituted by a LED being in parallel connected with a voltage-limiting unit, and two or more than two of the light-emitting units are series connected in same-polarity to constitute the light-emitting unit set.
FIG. 2 is a schematic view showing a conventional LED device constituted by two light-emitting unit sets being series connected in the reverse polarity.
FIG. 3 is a circuit schematic diagram showing that two or more than two series-connected LED sets in the same polarity are parallel connected with a shared voltage-limiting unit at two ends thereof, and two ends of individual LED are respectively in parallel connected with a voltage-equalizing resistance and thereby constitute the light-emitting unit.
FIG. 4 is a circuit schematic diagram showing that the plural light-emitting units as shown in FIG 3 are series connected or series-parallel connected in the same polarity to constitute the light-emitting unit set.
FIG 5 is an applied circuit schematic diagram showing that two light-emitting units as shown in FIG. 3 are series connected in reverse polarity.
FIG. 6 is an applied circuit schematic diagram showing that two or more than two light-emitting unit sets as shown in FIG. 4 are series connected in the reverse polarity.
FIG. 7 is an applied circuit schematic diagram of present invention showing that the two ends of the two series-connected light-emitting units in the reverse polarity as shown in FIG. 5 are respectively parallel connected with the diodes in the reverse polarity.
FIG. 8 is an applied circuit schematic diagram of present invention showing that the two ends of same-polarity series light-emitting unit sets of different polarity sides, which are series connected in the reverse polarity, as shown in FIG 6 are respectively parallel connected with the diode in the reverse polarity.
FIG. 9 is a circuit schematic diagram showing that two or more than two of the light-emitting units, which are constituted by a LED being connected in parallel with a voltage-limiting unit then connected in parallel with a voltage-equalizing resistance, are connected in series or in series-parallel in the same polarity to constitute the light-emitting unit set.
FIG. 10 is an applied circuit schematic diagram wherein two or more than two of the light-emitting unit sets as shown in FIG. 9 are in reverse-polarity series connection

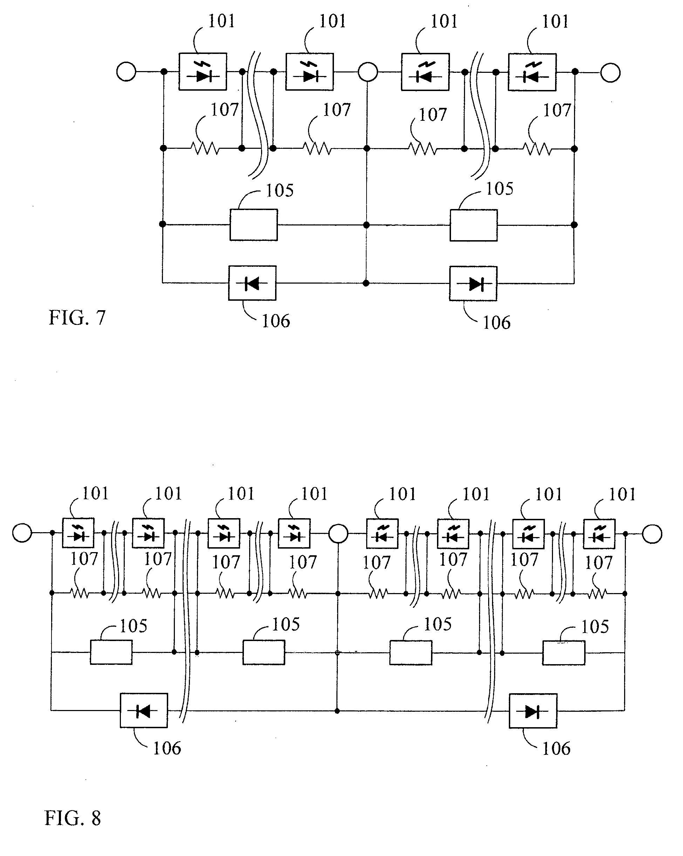

Only the embodiments according to figures 7 and 8 correspond to the subject-matter of the present invention.

### DESCRIPTION OF MAIN COMPONENT SYMBOLS

101 : LED Light-emitting diode
105 : Voltage-limiting unit
106 : Diode
107 : Voltage-equalizing resistance

### DETAILED DESCRIPTION OF THE PREFERRED EMBODIMENTS

Conventional LEDs usually parallel connect with the voltage-limiting units at two ends of each LED, such as the zener diode, to constitute the light-emitting unit, thereby when the end voltage of LED is abnormally increased, the abnormal voltage is absorbed by the zener diode; however, when the light-emitting units being parallel connected by the above mentioned LED and the zener diode are series connected (including series-parallel connected) in plural sets to constitute the light-emitting unit, the voltage is not able to be evenly distributed due to the different properties of the LED and the zener diode, so that when subject to abnormal high voltage, the LED loaded with higher end voltage is passed by the higher current therefore the LED is often damaged.

The present invention relates to a LED device with shared voltage-limiting unit and individual voltage-equalizing resistance, wherein two ends of a LED set constituted by a plurality of normal-polarity series LEDs are in parallel connected with a shared voltage-limiting unit, and two ends of individual LED are respectively in parallel connected with an voltage-equalizing resistance for providing an overvoltage protection to the LEDs, so when surge voltage from a power source is generated, the surge voltage can be absorbed by the shared voltage-limiting unit, so that individual LED is protected from being damaged due to instant overvoltage or overcurrent..

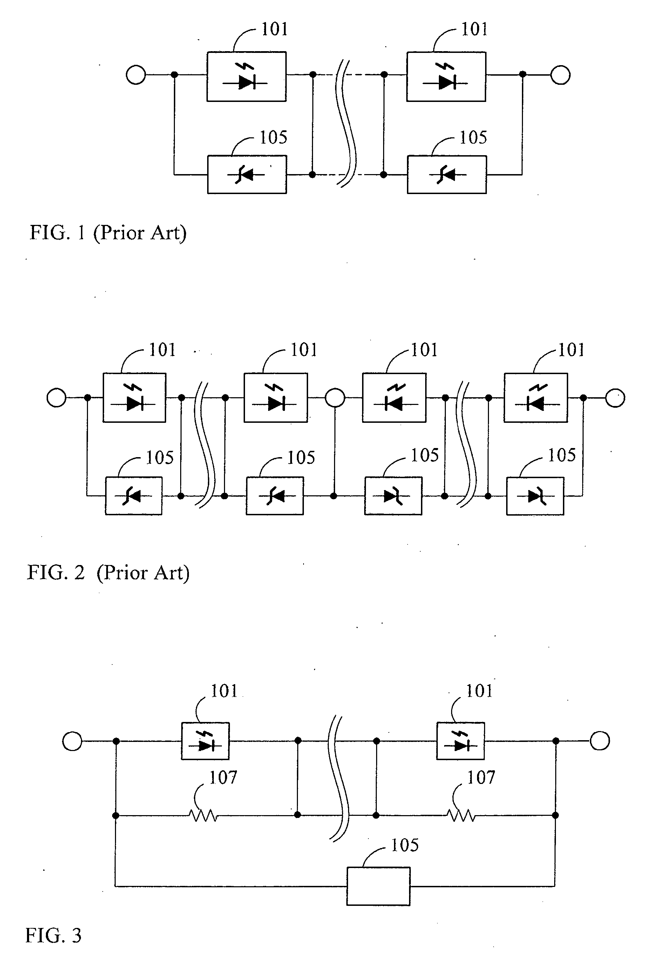

FIG. 1 is a circuit schematic diagram showing that a conventional light-emitting unit is constituted by a LED being in parallel connected with a voltage-limiting unit, and two or more than two of the light-emitting units are series connected in same-polarity to constitute the light-emitting unit set.

As shown in FIG. 1, a light-emitting unit is constituted by a LED being in same-polarity parallel connected with a zener diode, and two or more than two of the light-emitting units are series connected or series-parallel connected, in the same polarity to constitute the light-emitting unit set.

FIG 2 is a schematic view showing a conventional LED device constituted by two light-emitting unit sets being series connected in the reverse polarity.

As shown in FIG. 2, the main structure is that a light-emitting unit is constituted by a LED being in parallel connected with a zener diode, and two or more than two of the mentioned are series connected in the same polarity to constitute the light-emitting unit set, and two or more than two of the mentioned light-emitting unit sets are series connected in reverse polarity to constitute the LED device.

FIG. 3 is a circuit schematic diagram showing that two or more than two series-connected LED sets in the same polarity are parallel connected with a shared voltage-limiting unit at two ends thereof, and two ends of individual LED are respectively in parallel connected with a voltage-equalizing resistance and thereby constitute the light-emitting unit.

As shown in FIG. 3, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

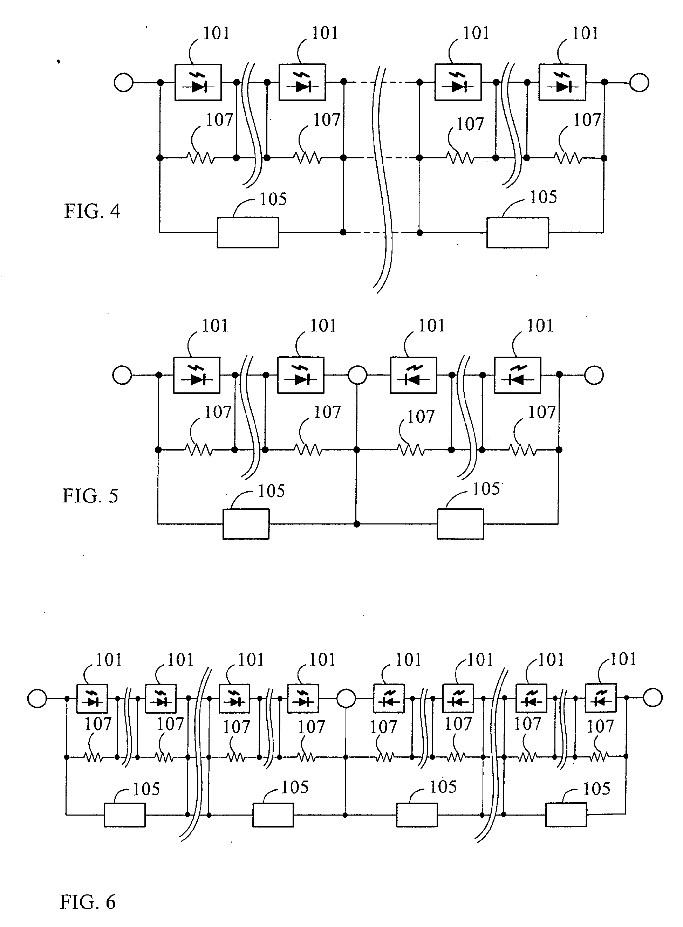

FIG. 4 is a circuit schematic diagram showing that the plural light-emitting units as shown in FIG. 3 are series connected or series-parallel connected in the same polarity to constitute the light-emitting unit set.

As shown in FIG. 4, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

A light-emitting unit set is structured through series connecting or series-parallel connecting the plural mentioned light-emitting units in the same polarity.

FIG. 5 is an applied circuit schematic diagram showing that two light-emitting units as shown in FIG 3 are series connected in reverse polarity.

As shown in FIG. 5, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

The application is structured through series connecting two mentioned light-emitting units in reverse polarity.

FIG. 6 is an applied circuit schematic diagram showing that two or more than two light-emitting unit sets as shown in FIG. 4 are series connected in the reverse polarity.

As shown in FIG. 6, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

A light-emitting unit set is structured through series connecting or series-parallel connecting the plural mentioned light-emitting units in the same polarity;

The application is structured through series connecting two or more than two of the mentioned light-emitting unit in the reverse polarity.

FIG. 7 is an applied circuit schematic diagram of present invention showing that the two ends of the two series-connected light-emitting units in the reverse polarity as shown in FIG. 5 are respectively parallel connected with the diodes in the reverse polarity.

As shown in FIG 7, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

Two of the mentioned light-emitting units are series connected in the reverse polarity;

And two ends of the series-connected light-emitting units in the reverse polarity are respectively parallel connected with the diodes (6) in the reverse polarity.

FIG. 8 is an applied circuit schematic diagram of present invention showing that the two ends of same-polarity series light-emitting unit sets of different polarity sides, which are series connected in the reverse polarity, as shown in FIG. 6 are respectively parallel connected with the diode in the reverse polarity;

As shown in FIG. 8, it mainly consists of:
-- LED (101): constituted by the light emitting diodes;
-- Voltage-limiting unit (105): constituted by a semiconductor unit, e.g. a zener diode or a varistor, with a property of the resistance thereof being rapidly reduced when subject to overvoltage;
-- Voltage-equalizing resistance (107): constituted by the resistive component and served to be parallel connected at two ends of each LED;
   a light-emitting unit is structured through parallel connecting a shared voltage-limiting unit (105) at two ends of two or more than two series-connected LEDs (101) in the same polarity, and parallel connecting with the voltage-equalizing resistance (107) at two ends of each individual LED (101);

The light-emitting unit sets is structure through series connecting or series-parallel connecting plural mentioned light-emitting units in the same polarity;

Two or more than two sets of the mentioned light-emitting unit sets are series connected in the reverse polarity;

and in the two reverse-polarity series light-emitting unit sets that belong to different polarity sides, the two ends of the plural light-emitting unit sets in same-polarity series (or series and parallel) connection are respectively parallel connected with the diode (106) in the reverse polarity.

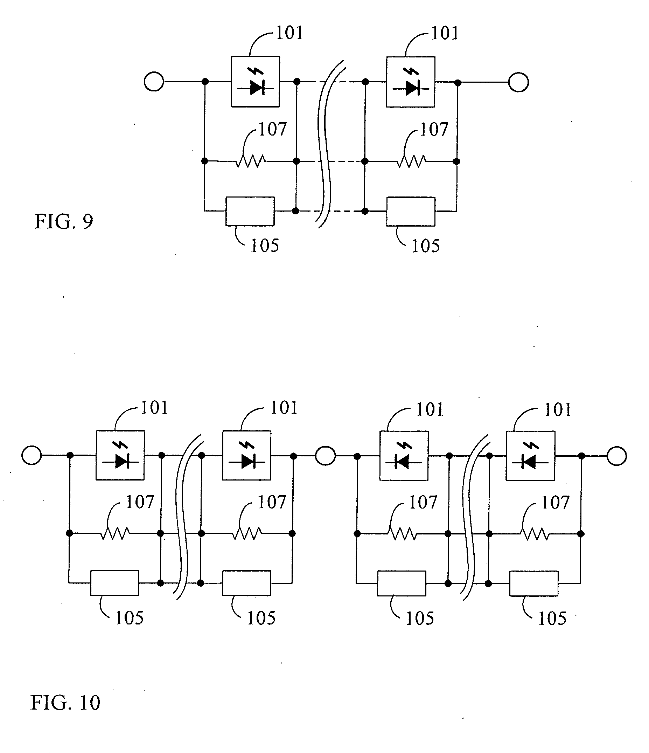

FIG 9 is a circuit schematic diagram showing that two or more than two of the light-emitting units, which are constituted by a LED being connected in parallel with a voltage-limiting unit then connected in parallel with a voltage-equalizing resistance, are connected in series or in series-parallel in the same polarity to constitute the light-emitting unit set.

As shown in FIG. 9, it mainly consists of:
-- LED (101): constituted by the light emitting diode;
-- Voltage-limiting unit (105): constituted by a semiconductor unit, e.g. a zener diode or a varistor, with a property of the resistance thereof being rapidly dropped when subject to overvoltage;
-- Voltage-equalizing resistance (107): constituted by the resistive component and served to be parallel connected at two ends of each LED;
   wherein a light-emitting unit is structured through connecting the LED (101) in parallel with the voltage-limiting unit (105) then further connecting in parallel with the voltage-equalizing resistance (107);

And a light-emitting unit set is structured through series-connecting or series-parallel connecting two or more than two of the mentioned light-emitting units in the same polarity.

Referring to FIG. 10, which is an applied circuit schematic diagram wherein two or more than two of the light-emitting unit sets as shown in FIG 9 are in reverse-polarity series connection;

As shown in FIG. 10, it mainly consists of:
-- LED (101): constituted by the light emitting diode;
-- Voltage-limiting unit (105): constituted by a semiconductor unit, e.g. a zener diode or a varistor, with a property of the resistance thereof being rapidly dropped when subject to overvoltage;
-- Voltage-equalizing resistance (107): constituted by the resistive component and served to be parallel connected at two ends of each LED;
   wherein a light-emitting unit is structured through connecting the LED (101) in parallel with the voltage-limiting unit (105) then further connecting in parallel with the voltage-equalizing resistance (107);

And a light-emitting unit set is structured through series-connecting or series-parallel connecting two or more than two of the mentioned light-emitting units in the same polarity;

Two or more than two of the mentioned light-emitting unit sets are connected in series in the reverse polarity.

According to the LED device with shared voltage-limiting unit and individual voltage-equalizing resistance of the present invention, the mentioned LED (101) can not only be structured with a single LED (101), but two or more than two LEDs (101) can be provided for structuring a LED unit through connecting the LEDs in series, in parallel or in series and parallel to replace the single LED (101).

According to the LED device with shared voltage-limiting unit and individual voltage-equalizing resistance of the present invention, the voltage-limiting protective unit consists one or mom than more of the following units, wherein one or more than one units being in same-polarity series, parallel or series and parallel connection, which include:
-- zener diode;
-- varistor;
-- diode with property of forward voltage drop;
-- zener diode with property of reverse-polarity forward voltage drop.

According to the present invention, the power source for the provided LED device can be a constant-current power source or constant-voltage power source, or a current-limiting power source or voltage-limiting power source, or a power source wherein voltage and current not being particularly controlled; for cooperating the operation of the voltage-limiting unit of the present invention, an internal impedance at an output end of the power source or an impedance unit between the output end of the power source and the loading can be further provided, so when the voltage of the power source is altered, the current passing through the voltage-limiting unit generates a voltage drop at the two ends of the impedance unit, and a voltage regulation effect is provided to the voltage at the two ends of the LED device of the present invention.

## Claims

1. A LED device with shared voltage-limiting unit and individual voltage-equalizing resistance, the LED device comprising:
a voltage-limiting unit (105)including a semiconductor unit, e.g. a zener diode or a varistor, with a property of the resistance thereof being rapidly reduced when subject to overvoltage;
a voltage-equalizing resistance (107) including a resistive component;
at least two light-emitting units, each being structured through parallel connecting a shared voltage-limiting unit (105) at two ends of two or more than two series-connected LEDs (101) in the same polarity, and parallel connecting with the voltage-equalizing resistance (107) at two ends of each individual LED (101)
wherein the at least two light-emitting units are series connected in reverse polarity; and
wherein the two ends of the two series-connected light-emitting units in the reverse polarity are respectively parallel connected with diodes in the reverse polarity.

2. The LED device with shared voltage-limiting unit and individual voltage-equalizing resistance as claimed in claim 1, wherein the LED (101) is not only structured with a single LED (101), two or more than two LEDs (101) are further provided for structuring a LED unit through connecting the LEDs in series, in parallel or in series and parallel to replace the single LED (101).

3. The LED device with shared voltage-limiting unit and individual voltage-equalizing resistance as claimed in claim 1, wherein the voltage-limiting protective unit consists one or morn than more of the following units, wherein one or more than one units being in same-polarity series, parallel or series and parallel connection, which include:
-- zener diode;
-- varistor;
-- diode with property of forward voltage drop; and
-- zener diode with property of reverse-polarity forward voltage drop.

## Patentansprüche

1. LED-Einrichtung mit gemeinsamer Spannungsbegrenzungseinheit und individuellem Spannungsausgleichswiderstand, wobei die LED-Einrichtung umfasst:
eine Spannungsbegrenzungseinheit (105), die eine Halbleitereinheit beinhaltet, z. B. eine Zenerdiode oder einen Varistor, wobei eine Eigenschaft des Widerstands davon schnell verringert wird, wenn einer Überspannung ausgesetzt;
einen Spannungsausgleichswiderstand (107), der eine Widerstandskomponente beinhaltet;
zumindest zwei lichtemittierende Einheiten, wobei jede durch Parallelverbindung einer gemeinsamen Spannungsbegrenzungseinheit (105) an zwei Enden von zwei oder mehr als zwei in Reihe verbundenen LEDs (101) mit der gleichen Polarität und durch Parallelverbinden mit dem Spannungsausgleichswiderstand (107) an zwei Enden jeder einzelnen LED (101) strukturiert ist,
wobei die zumindest zwei lichtemittierenden Einheiten mit Verpolung in Reihe verbunden sind; und
wobei die zwei Enden der zwei in Reihe verbundenen lichtemittierenden Einheiten mit Verpolung jeweils mit Dioden mit Verpolung parallel verbunden sind.

2. LED-Einrichtung mit gemeinsamer Spannungsbegrenzungseinheit und individuellem Spannungsausgleichswiderstand nach Anspruch 1, wobei die LED (101) nicht nur mit einer einzelnen LED (101) strukturiert ist, wobei zwei oder mehr als zwei LEDs (101) ferner zum Strukturieren einer LED-Einheit durch Verbinden der LEDs in Reihe, parallel oder in Reihe und parallel bereitgestellt sind, um die einzelne LED (101) zu ersetzen.

3. LED-Einheit mit gemeinsamer Spannungsbegrenzungseinheit und individuellem Spannungsausgleichswiderstand nach Anspruch 1, wobei die Spannungsbegrenzungsschutzeinheit aus einer oder mehr als mehr der folgenden Einheiten besteht, wobei eine oder mehr als eine Einheit mit gleicher Polarität in Reihe, parallel oder in Reihe und parallel verbunden sind, die beinhaltet:
- Zenerdiode;
- Varistor;
- Diode mit einer Eigenschaft eines Vorwärtsspannungsabfalls; und
- Zenerdiode mit einer Eigenschaft eines Abfalls einer verpolten Spannung.

## Revendications

1. Dispositif à LED avec ensemble de limitation de tension commun et résistance d'égalisation de tension individuelle, le dispositif à LED comprenant : un ensemble de limitation de tension (105) comprenant un ensemble semiconducteur, c.à.d. une diode Zener ou une varistance avec la propriété que sa résistance est rapidement réduite lorsqu'elle est soumise à une surtension ; une résistance d'égalisation de tension (107) comprenant une composante résistive ;
au moins deux unités électroluminescentes, chacune étant structurée par la connexion en parallèle de l'ensemble de limitation de tension (105) aux deux extrémités de deux ou plus de deux LED connectées en série (101) à la même polarité, et par la connexion en parallèle avec la résistance d'égalisation de tension (107) à deux extrémités de chaque LED individuelle (101)
où les au moins deux unités électroluminescentes sont connectées en série en polarité inversée ; et
où les deux extrémités des deux unités électroluminescentes connectées en série en polarité inversée sont respectivement connectées en parallèle avec des diodes de polarité inversée.

2. Dispositif à LED avec ensemble de limitation de tension commun et résistance d'égalisation de tension individuelle tel que revendiqué dans la revendication 1, où la LED (101) n'est pas structurée seulement avec une LED (101) unique, deux ou plus de deux LED (101) sont fournies en outre pour la structuration de l'ensemble à LED par la connexion des LED en série, en parallèle ou en série et en parallèle afin de remplacer la LED (101) unique.

3. Dispositif à LED avec ensemble de limitation de tension commun et résistance d'égalisation de tension individuelle tel que revendiqué dans la revendication 1, où l'ensemble protecteur de limitation de tension consiste en une ou plus d'une des unités suivantes, où une ou plus d'une des unités sont connectées en série ou en parallèle ou en série et en parallèle, de la même polarité, comprenant :
- diode Zener ;
- varistance ;
- diode avec la propriété de chute de tension directe ; et
- diode Zener avec la propriété de chute de tension directe en polarité inversée.
